# EUROPEAN PATENT SPECIFICATION

(11) **EP 1 871 597 B1**
(45) Date of publication and mention of the grant of the patent: **22.05.2013**
(21) Application number: 06707076.3
(22) Date of filing: 17.02.2006
(51) Int. Cl.: B32B 27/08, B32B 27/32, B32B 27/30, C08L 23/08, B65D 75/30

(54) **MICROWAVEABLE FILM OR SHEET SUITABLE FOR VACUUM SKIN PACKAGING APPLICATIONS AND PEELABLE MICROWAVEABLE VACUUM SKIN PACKAGE OBTAINED THEREWITH**
DURCH MIKROWELLEN ERHITZBARER FILM ODER SOLCHE FOLIE FÜR VAKUUM-SKIN-VERPACKUNGSANWENDUNGEN UND DAMIT ERHALTENE ABZIEHBARE DURCH MIKROWELLEN ERHITZBARE VAKUUM-SKIN-VERPACKUNG
FILM OU FEUILLE POUVANT PASSER AU FOUR À MICRO-ONDES ET ADAPTÉ AUX APPLICATIONS EN PELLICULES SOUS VIDES, AINSI QUE L'EMBALLAGE PELABLE EN PELLICULE SOUS VIDE DÉRIVÉ

(30) Priority: 07.03.2005 EP 05101749; 16.09.2005 EP 05108515
(43) Date of publication of application: 02.01.2008
(73) Proprietor: Cryovac, Inc., Duncan, SC 29334 (US)
(72) Inventor: RICCIO, Marina, I-20090 Cesano Boscone (IT); DELLA BIANCA, Serena, I-20017 Rho (IT)
(74) Representative: UEXKÜLL & STOLBERG
(86) International application number: PCT/EP2006/001491
(87) International publication number: WO 2006/094617

(56) References cited:
- US-A- 3 819 792
- US-A- 4 539 263
- US-A- 5 023 121
- US-B1- 6 358 622

## Description

The present invention relates to a new microwaveable thermoplastic film or sheet suitable for vacuum skin packaging applications and to a peelable microwaveable vacuum skin package obtained using said film or sheet, suitable for the presentation and preservation of a food product and for use in cooking, re-heating and/or thawing the packaged food product in a microwave oven.

A wide variety of products, especially food products like meat, sausages, cheese, ready meals, and the like, are being offered in visually attractive packages made from two thermoplastic webs using the vacuum skin packaging process.

Vacuum skin packaging (VSP) is a process well known in the art using a thermoplastic packaging material to enclose a food product. The vacuum skin packaging process is in one sense a type of thermoforming process in which an article to be packaged serves as the mold for the forming web. An article may be placed on a rigid or semi-rigid support member, that can be flat or shaped, e.g., tray-shaped, bowl-shaped or cup-shaped (called "bottom" web), and the supported article is then passed to a chamber where a "top" web is first drawn upward against a heated dome and then draped down over the article. The movement of the top web is controlled by vacuum and/or air pressure, and in a vacuum skin packaging arrangement, the interior of the container is vacuumized before final welding of the top web to the bottom web. In a vacuum skin package the upper heated film thus forms a tight skin around the product and is sealed to the support.

Skin packaging is described in many references, including French Patent No. 1,258,357, French Patent No. 1,286,018, US Pat. No. 3,491,504, U.S. Pat. No. RE 30,009, U.S. Pat. No. 3,574,642, U.S. Pat. No. 3,681,092, U.S. Pat. No. 3,713,849, U.S. Pat. No. 4,055,672, and U.S. Pat. No. 5,346,735.

The term "microwaveable", as well as the term "microwave-compatible", as used in the present application, refers to films or sheets that are "substantially microwave-transparent" as well as those that are "microwave-active". While substantially microwave-transparent are those films or sheets capable of being crossed by at least 80%, preferably at least 90% of the microwaves generated by a microwave oven without any sort of interference therewith, the microwave-active ones are those that incorporate microwave reflective components intended to modify the energy deposition within the adjacent foodstuff. To be "microwaveable" in both cases, under the conditions of use, the packaging material should not be degraded or deformed and it should not release more than 60 ppm of global contaminants to the packaged food in contact therewith. In practice, packaging materials that withstand a heat treatment at 121 °C for ½ hour (conditions that are drastic enough not to be reached normally in microwave cooking) with only a slight, acceptable, deformation and releasing less than 60 ppm of contaminants, are considered to be "microwaveable" according to most of the food laws.

In vacuum skin packaging the product is packaged under vacuum and the space containing the product is evacuated from gases during the packaging process. It is therefore generally desirable that both the top skin film formed around the product and the bottom one used for the support member present a barrier to oxygen, air, and other gases detrimental to the shelf or storage life of a food product. In certain types of VSP packages, however, such as those described in WO-A-198702965, where a flat gas-barrier lid closes the tray in which the product is skin packed to the gas-barrier bottom, a highly permeable top web is preferably employed to allow the preserving gas contained in the package to permeate and reach the packaged product.

When the packaged food product needs to be thawed and/or cooked or reheated before eating, this can be done using a self-venting microwaveable package as described in WO-A-2003020608 wherein the top and bottom webs used in the package are suitably selected in such a way that the peel strength between them is comprised between about 2.0 and about 4.0 N/25.4 mm. Applying the teaching of WO-A-2003020608, it is possible to thaw and/or cook, or re-heat, the packaged product in a microwave oven without the need of removing, loosening or perforating the top lid before putting the package into the oven, without any risk of explosion and avoiding any substantial stretching of the top skin web. The top skin web in fact will raise over the product by the pressure of the vapor released by the product or by the sauce accompanying the product without being overstretched because a channel for the excess vapor to vent off will then be created, between the top skin and the bottom webs, from the packaged product to the outermost edge of the package. The top skin will remain raised over the product until the heating is on, allowing the steaming of the product, and will then return to its original position as soon as the heating is over.

WO-A-2003020608 describes several mechanisms by which the required peel strength can be obtained in a VSP package. In one of them the sealing layers of the top and bottom webs are selected in such a way that they would separate at their interface ("peel" one from the other) upon application of a force of between about 2.0 and about 4.0 N/25.4 mm. This would be typically obtained by suitably selecting resins or blends of resins for said sealing layers of a sufficiently different chemical nature. In another one the peel strength within the given range is achieved by using in at least one of the bottom and top webs a thin sealing layer and an adjacent layer of a thermoplastic material suitably selected in such a way that the bond between the sealing layer and said adjacent layer is sufficiently low that upon application of a force of between about 2.0 and about 4.0 N/25.4 mm the sealing layer will initially break and then peel at the interface with said adjacent layer. According to still another mechanism the suitable peel strength is obtained by using in the seal layer, or in the layer adjacent to a very thin seal layer, of one of the two webs, a resin blend that has a low cohesive strength.

Self-venting commercial VSP packages are presently based on the third mechanism seen above (cohesive failure), and have the disadvantage that pack opening gives a whitening effect. Said effect which is particularly apparent when a colored bottom is employed, is badly perceived by the customers.

Furthermore, the requirements for a suitable self-venting VSP package are becoming more and more demanding, as the number of recipes and ingredients employed is increasing and longer lasting heat treatments may be required. Therefore there is a continuous need for improved systems endowed with a better heat resistance.

It has now been found that when a VSP package is obtained where one of the top and bottom webs has an outer sealant layer comprising a blend of from about 8 to about 30 wt. % of modified polypropylene, from 0 to about 20 % of polybutene, and the complement to 100 % of ionomer, and the sealant layer of the other web is an ethylene homo- or copolymer-based surface, it is possible to obtain a VSP package that is peelable, does not give any whitening effect when opened and has a remarkable heat resistance.

with the term modified polypropylene it is intended to refer to a polypropylene that has been modified by grafting thereon an unsaturated carboxylic acid or a derivative thereof.

It is therefore a first object of the present invention a multi-layer film or sheet suitable for use in VSP applications that has an outer layer comprising a blend of from about 8 to about 30 wt. % of modified polypropylene, from 0 to about 20 wt. % of polybutene and the complement to 100 wt. % of ionomer.

In one embodiment of this first object, the outer layer of the multi-layer film or sheet suitable for use in VSP applications comprises a blend of from about 10 to about 30 wt. % of modified polypropylene and the complement to 100 wt. % of ionomer, and preferably said outer layer essentially consists of a blend of from about 10 to about 30 wt. % of modified polypropylene and the complement to 100 wt. % of ionomer.

In another embodiment of this first object, the outer layer of the multi-layer film or sheet suitable for use in VSP applications comprises a blend of from about 8 to about 30 wt. % of modified polypropylene, from about 5 to about 20 wt. % of polybutene, and the complement to 100 wt. % of ionomer.

A second object of the present invention is a peelable VSP package comprising a first web comprising an outer sealing layer comprising a blend of from about 8 to about 30 wt. % of modified polypropylene, from 0 to about 20 wt. % of polybutene and the complement to 100 wt. % of ionomer and a second web comprising an outer sealing layer having an ethylene homo- or copolymer-based surface, wherein said outer sealing layers of the first and second webs are sealed to each other in one or more selected areas with a seal strength of from about 2.0 to about 4.0 N/25.4 mm.

In one preferred embodiment of this second object, the first web of the peelable VSP package comprises an outer sealing layer comprising a blend of from about 10 to about 30 wt. % of modified polypropylene and the complement to 100 wt. % of ionomer. More preferably, in said embodiment, the outer sealing layer essentially consists of said blend.

In another preferred embodiment of this second object, the first web of the peelable VSP package comprises an outer sealing layer comprising a blend of from about 8 to about 30 wt. % of modified polypropylene, from about 5 to about 20 wt. % of polybutene and the complement to 100 wt. % of ionomer.

Preferably, in the peelable VSP package of the present invention, said first web is the package bottom web (or "non forming" web to distinguish it from the top or "forming" web that is draped around the product).

### DETAILED DESCRIPTION OF THE INVENTION

The multi-layer film or sheet of the present invention may have a widely varying thickness. In particular when the film is used as a liner to be laminated to a substrate and used as the bottom web in a VSP package or when it is used in other packaging applications for thin films, its thickness may range e.g. from 15-20 µm to 40-50 µm; when it is used as the top web in a VSP package or when it is used in other packaging applications for thick films, its thickness may range from 50-60 µm to 150-200 µm; while, when it is used as the bottom web in a VSP package, its thickness may range from 200-250 µm to e.g., 900-1,200 µm, depending on whether it is solid or partially foamed.

The key feature of the film or sheet of the present invention is the presence of an outer layer comprising a blend of from about 8 to about 30 wt. % of modified polypropylene, from 0 to about 20 wt. % of polybutene and the complement to 100 wt. % of ionomer.

Ionomer is a copolymer of an ethylene and an ethylenically unsaturated monocarboxylic acid having the carboxylic acid neutralized by a metal ion, such as zinc or, preferably, sodium. Typically ionomers include at least 60 % by weight, preferably at least 70 % by weight and more preferably at least 80 % by weight of ethylene units. Useful ionomers include those in which sufficient metal ion is present to neutralize from about 15 to about 60 % of the acid groups of the ionomer. The carboxylic acid is preferably acrylic and/or methacrylic acid. Useful ionomers are commercially available from DuPont under the trademark Surlyn®, e.g, Surlyn® 1601, Surlyn® 1652, or Surlyn® 1650.

With the term modified polypropylene it is intended to refer to a polypropylene that has been modified by grafting thereon an unsaturated carboxylic acid or a derivative thereof. Unsaturated carboxylic acids usable herein include, for example, acrylic acid, methacrylic acid, maleic acid, fumaric acid, itaconic acid, and citraconic acid. Further, acid anhydrides of these unsaturated carboxylic acids are also suitable. Among them, maleic anhydride is most preferred. The degree of modification with the unsaturated carboxylic acid is preferably from 0.1 to 10% by weight, particularly preferably from 0.2 to 5% by weight.

In general, an organic peroxide is used to induce a graft reaction of the polypropylene with the unsaturated carboxylic acid. Organic peroxides usable for this purpose include, e.g., benzoyl peroxide, lauroyl peroxide, azobisisobutyronitrile, dicumyl peroxide, 2,5-dimethyl-2,5-di(t-butylperoxy)hexane, t-butyl hydroperoxide, 2,5-dimethyl-2,5-di(t-butylperoxy)hexyne-3, and di-t-butyl peroxide.

The modified polypropylene used in the present invention is preferably a modification product obtained by grafting maleic anhydride on a homopolymer of propylene. Examples of commercially available modified polypropylene products that can suitably be employed in the present invention are Bynel® 50E631 by DuPont, Admer® QB520A by Mitsui, and Tymor 2206 by Rohm and Haas.

Polybutene, as used herein, refers to semi-crystalline homopolymers of butene-1, suitable for the manufacture of cast or blown films. Grades of polybutene that are preferably employed in the present invention have a melting point higher than 125 °C (Tm₁). Preferably the Melt Index (190°C /2.16kg) of suitable polybutene resins would be up to 20 g/10 min, even more preferably up to 10 g/10 min. Examples of suitable commercial grades are Polybutene-1 PB 0110M and Polybutene-1 PB 0300M both by Basell.

In one preferred embodiment the outer layer of the multilayer film or sheet of the present invention will comprise a blend comprising from about 10 to about 30 wt. % of modified polypropylene and the complement to 100 wt. % of ionomer. More preferably in such a case the preferred ratio between the ionomer and the modified polypropylene will be from about 10 to about 20 wt. % of modified polypropylene and conversely from about 90 to about 80 wt. % of ionomer for films or sheets with a thickness higher than 300 µm, while it will be from about 15 to about 25 wt. % of modified polypropylene and conversely from about 85 to about 75 wt. % of ionomer for films or sheets with a thickness lower than 300 µm.

More preferably in said embodiment the outer layer will essentially consist of a blend comprising from about 10 to about 30 wt. % of modified polypropylene and the complement to 100 wt. % of ionomer

In another preferred embodiment the outer layer of the multilayer film or sheet of the present invention will comprise a blend comprising from about 8 to about 30 wt. % of modified polypropylene, from about 5 to about 20 wt. % of polybutene and the complement to 100 wt. % of ionomer. More preferably in such a case the amount of modified polypropylene will be comprised between about 10 and about 20 wt. % and that of polybutene between about 5 and about 15 wt. %, with the complement to 100 wt. % of said blend of ionomer.

The thickness of the above outer layer will typically be comprised between about 1 and about 20 % of the overall film or sheet thickness, preferably between about 2 and about 15 %.

The multi-layer film or sheet of the present invention will comprise at least a layer that is directly adhering to the above described outer layer and that is designed to form a bond strength to the outer layer that is stronger than the seal strength formed in the end package between the above outer layer and the other web to which the film or sheet is sealed. Generally therefore the bond strength between the above outer layer and the layer directly adhering thereto in the multi-layer fihn or sheet of the first object is at least higher than about 4.0 N/25.4 mm, preferably at least higher than 5.0 N/25.4 mm, and more preferably at least higher than 6.0 N/25.4 mm.

Said layer will typically comprise a modified polyolefin or a blend of a polyolefin with a modified polyolefin, possibly combined with a small percentage of a rubber.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and a non-olefinic co-monomer co-polymerizable with the olefin, such as vinyl monomers, modified polymers thereof, and the like. Specific examples include polyethylene homo-polymer, polypropylene homo-polymer, polybutene homo-polymer, ethylene-α-olefin co-polymer, propylene-α-olefin co-polymer, butene-α-olefin co-polymer, ethylene-unsaturated ester co-polymer, ethylene-unsaturated acid co-polymer, (e.g. ethyl acrylate co-polymer, ethylene-butyl acrylate co-polymer, ethylene-methyl acrylate co-polymer, ethylene-acrylic acid co-polymer, and ethylene-methacrylic acid co-polymer), ionomer resin, polymethylpentene, etc.

As used herein the term "modified polyolefin" is inclusive of modified polymer prepared by co-polymerizing the homo-polymer of the olefin or co-polymer thereof with an unsaturated carboxylic acid, e.g., maleic acid, fumaric acid or the like, or a derivative thereof such as the anhydride, ester or metal salt or the like. It is also inclusive of modified polymers obtained by incorporating into the olefin homo-polymer or co-polymer, by blending or preferably by grafting, an unsaturated carboxylic acid, e.g., maleic acid, fumaric acid or the like, or a derivative thereof such as the anhydride, ester or metal salt or the like.

Preferably the layer directly adhering to the outer layer comprising the blend of modified polypropylene, ionomer and possibly polybutene, will comprise an ethylene homo- or copolymer grafted with an anhydride, such as a LDPE or LLDPE grafted with maleic anhydride.

The multi-layer film or sheet of the present invention will preferably comprise also a second outer, abuse resistant, layer, possibly an intermediate gas-barrier layer, and tie or adhesive layers, if necessary, to improve the bond between adjacent layers of the film or sheet. The film or sheet may also comprise one or more bulk layers to provide the necessary thickness to the film or sheet and improve the mechanical properties thereof, i.e. increase puncture resistance, increase abuse resistance, etc.

For the outer abuse-resistant layer, the bulk layers, if any, and the tie layers of the film or sheet of the present invention, any type of microwaveable resin can be employed. Examples of resins that can suitably be employed include polyolefins (such as propylene-based polymers or preferably cross-linked polyethylene-based polymers), modified polyolefins, polyesters, nylons and any other thermoplastic material that under the conditions of use will not be altered by microwaves.

However if the film or sheet is used as the top web of the VSP package, the resins used should also be easily formable as the top web needs to be stretched and softened in the heated dome of the VSP machine before being draped down on the product and bottom web. On the other hand, no particularly strict requirements exist in case the film or sheet of the present invention is used as the bottom web in the VSP process, except a certain degree of thermoformability in case a shaped bottom is required in the final package.

When according to a preferred embodiment, the film or sheet of the present invention is used as the bottom web of a VSP package, the outer abuse-layer and/or preferably the bulk layer(s) possibly present in the structure can be foamed. Physical or preferably chemical foaming of bulk layers of polypropylene or polyester resins may give a rigid or semi-rigid sheet with good mechanical properties that still can be thermoformed to give a tray-, cup-, or bowl-shaped bottom support for the product.

The gas-barrier layer, if present, generally includes a polymeric material with low oxygen transmission characteristics, such as PVDC, EVOH, polyamides, polyesters or blends thereof.

PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

EVOH is the saponified product of ethylene-vinyl ester copolymers, generally of ethylene-vinyl acetate copolymers, wherein the ethylene content is typically comprised between 20 and 60 % by mole and the degree of saponification is generally higher than 85 % preferably higher than 95 %.

Polyamides used as gas barrier layer can be homo- or co-polyamides. This term specifically includes those aliphatic polyamides or copolyamides commonly referred to as e.g. polyamide 6 (homopolymer based on ε- caprolactam), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on ε-caprolactam and hexamethylenediamine and adipic acid), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

Preferably however the gas-barrier layer will comprise EVOH, possibly blended with a minor amount of a polyamide.

When gas-barrier properties are required, the thickness of the gas barrier layer will be suitably selected in order to provide the overall structure with an oxygen transmission rate (evaluated by ASTM D3985) of less than 200 cm³/m².atm.d, at room temperature and 0 % relative humidity, e.g., less than 100, or less than 50 cm³/m².atm.d.

One or more of any of the layers of the film or sheet of the present invention may include appropriate amounts of additives typically included in food packaging films for the desired effect, as is known to those of skill in the art. For example, a layer may include additives such as slip agents, antiblock agents, antioxidants, fillers, pigments and dyes, radiation stabilizers, antistatic agents, cross-linking inhibitors or cross-linking enhancers, anti-fog agents, and the like, as known in the art.

The film or sheet of the present invention is obtained by any suitable coextrusion process, either through a flat or a round extrusion die, preferably by cast coextrusion or by hot blown. Preferably, for use as the top web of a VSP package the film or sheet of the present invention is substantially non oriented. Also for use as or in the bottom web of a VSP package the film or sheet of the present invention is preferably substantially non oriented. Oriented and heat-set films or sheets might however be suitably employed for the bottom web.

The film or sheet of the present invention, or only one or more of the thermoplastic layers thereof, may be cross-linked to e.g. improve the strength of the film and/or help to avoid burn through during heat seal operations. Cross-linking may be achieved by using chemical additives or by subjecting the film layers to an energetic radiation treatment, such as a high-energy electron beam treatment, to induce cross-linking between molecules of the irradiated material. Cross-linking will be necessary in case the film or sheet of the invention is used as the top web and is aimed at increasing the heat resistance of the film or sheet that has to be brought in contact with the heated dome.

The film of the present invention may also be used as a liner and laminated to a substrate and the substrate/film composite may then be used as the bottom web in a VSP package. In such a case heat lamination or glue lamination could be employed for the manufacture of said composite starting from the film of the invention and the suitably selected substrate. Any mono- or multi-layer, solid or foamed or partially foamed, sheet of microwaveable resins as indicated above could be a suitable substrate. In a preferred embodiment a solid or preferably foamed polypropylene or polyester layer can be used as a suitable substrate.

When the film or sheet of the present invention is used in a VSP application the other web of the package will have an outer sealing surface that would be ethylene homo- or co-polymer-based. Preferably said outer sealing surface of the other web will comprise an ionomer, such as Surlyn® 1702, an ethylene-α-olefin copolymer, such as a heterogeneous or homogeneous LLDPE, an ethylene-acrylic acid copolymer, an ethylene-methacrylic acid copolymer, or an ethylene-vinyl acetate copolymer.

A second object of the present invention is a peelable microwaveable VSP package comprising a first web comprising an outer sealing layer comprising a blend of from about 8 to 30 wt. % of modified polypropylene, from 0 to about 20 wt. % of polybutene and the complement to 100 wt. % of ionomer, and a second web comprising an outer sealing layer having an ethylene homo- or copolymer-based surface, wherein said outer sealing layers of said first and second webs are sealed to each other in one or more selected areas with a seal strength of from about 2.0 to about 4.0 N/25.4 mm.

In one preferred embodiment the first web of the peelable VSP package according to the present invention will comprise an outer sealing layer comprising a blend of from about 10 to about 30 wt. % of modified polypropylene and the complement to 100 wt. % of ionomer. More preferably in said embodiment the first web of the peelable VSP package will essentially consist of said blend.

In another preferred embodiment the first web of the peelable VSP package according to the present invention will comprise an outer sealing layer comprising a blend of from about 8 to about 30 wt. % of modified polypropylene, from about 5 to about 20 wt. % of polybutene and the complement to 100 wt. % of ionomer. More preferably, also in said embodiment the first web of the peelable VSP package will essentially consist of said blend.

Preferably in the VSP package of the present invention the outer sealing layers of the first and second webs are sealed to each other with a seal strength comprised between about 2.0 and about 3.5 N/25.4 mm, and in a more preferred embodiment comprised between about 2.0 and about 3.0 N/25.4 mm.

The bottom web will be rigid or semi-rigid and, in case it is shaped, also easily thermoformable. As used herein the term "rigid" refers to a sheet of thermoplastic material that, when held horizontally by one only of its corners, is able to support itself in substantially a horizontal position, and that can tolerate a certain amount of physical forces, such as pressure or vacuum, without being deformed while the term "semi-rigid" refers to a sheet of thermoplastic material that, when held horizontally by one only of its comers, is able to support itself in substantially a horizontal position, but whose shape may change if pressure, vacuum, or some other force is applied thereto.

The top skin on the other hand needs to be a flexible film endowed with a sufficient stretchability for use in the VSP process.

Preferably the first web comprising an outer sealing layer comprising the blend of modified polypropylene, ionomer and possibly polybutene, will be the bottom web. In such a case the bottom web could consist of the film or sheet of the present invention optionally laminated to a suitable substrate, as indicated above, to give a rigid or semi-rigid web with a thickness typically up to about 2,000 µm, preferably up to about 1,200 µm, generally comprised between about 200 and about 750 µm.

A thinner flexible film, e.g. from about 50 to about 200 µm, will be employed for the top skin web. Said film will contain, in addition to an outer sealing layer that would peelably seal to the sealing layer of the bottom support web, optionally and preferably a core gas-barrier layer, a second outer, abuse-resistant, layer, tie layers to improve the bond between adjacent layers and optionally bulk layer to improve the film properties in term of puncture and abuse resistance and stretchability.

The VSP package can be made by a conventional VSP process and using conventional VSP equipment, such as a Multivac® CD 6000 machine.

The measurement of the peel strength is done as follows: strips of 25.4 mm in width and 300 mm in length are cut from mock VSP packages prepared starting from the suitably selected top and bottom webs sealed together in a VSP packaging cycle (e.g., using a Multivac^{®} CD 6000 machine) under the setting conditions of actual use; the two webs are manually separated until the bottom web may be fixed into the lower clamp of a dynamometer, and the top web into the upper clamp of the dynamometer, taking care that the area to be tested lies in the middle of the two clamps and that an adequate tensioning between the two extremities of the fixed sample is obtained; the peel strength is then measured with a crosshead speed of 200 mm/min and a jaw distance of 30 mm.

The VSP package according to the second object of the present invention can be put into the microwave oven, without opening it or puncturing the top web, and heated without any problem. The vapour released by the food product during the energy treatment will raise the top skin over the product thus creating a sort of vapour cushion around the product that maintains the product texture and taste and when the vapour pressure reaches the threshold value, then the package opens up and the excess vapour is vented off through the sort of channel that creates between the upper and lower webs of the packaging material. At the end of the cooking cycle, when no additional vapour is generated by the product, the top skin film lowers on top of the product with no wrinkles or plies, as it has not been overstretched during the cooking cycle. The package can then be withdrawn from the oven, the top skin removed, and the food product can be served, if desired, directly on the bottom support. No particular care should be taken while removing the top skin film as the hot vapour has been vented off during the cooking cycle. Using the film or sheet of the first object for the bottom web it has been found that the package can withstand longer heat treatments that the commercially available packaging materials. Furthermore when the package is opened, either before or during the microwave heating, no whitening effect can be perceived, even with colored bottom webs.

The following examples of suitable combinations of bottom and top webs for a VSP package are given only to better illustrate the present invention. They should not be interpreted however as a limitation to the scope thereof.

In the structures below the partial thicknesses of the various layers - in µm - are indicated between parentheses.

### Example 1

### Bottom web

- Blend of 85 wt. % of ionomer - Surlyn® 1601 by DuPont and 15 wt. % of maleic anhydride modified polypropylene - Bynel 50E631 by DuPont (or alternatively 15 wt. % of Tymor 2206 by Rhom and Haas) - Outer sealant layer (14)
- Rubber modified ethylene-α-olefin copolymer grafted with maleic anhydride - Tie layer (20)
- Foamed low density polyethylene - obtained through the extrusion of LDPE blended with a masterbatch containing a chemical foaming agent - bully layer (150)
- Rubber modified ethylene-α-olefin copolymer grafted with maleic anhydride - Tie layer (10)
- Ethylene-vinyl alcohol copolymer - barrier layer (11)
- Rubber modified ethylene-α-olefin copolymer grafted with maleic anhydride - Tie layer (10)
- Foamed polypropylene - obtained through the extrusion of polypropylene blended with a masterbatch of a chemical foaming agent - Bulk layer (350)
- Polypropylene - Outer abuse resistant layer (35)

### Top skin web (crosslinked to about 200 kGy)

- Ionomer (based on ethylene-methacrylic acid copolymer) - Surlyn® 1702 by DuPont - Sealant layer (6)
- Low density polyethylene - Bulk layer (14)
- Ethylene-vinyl acetate copolymer with 19 % VA - Bulk layer (19)
- Linear low density polyethylene modified with maleic anhydride - Tie layer (3)
- Ethylene-vinyl alcohol copolymer - barrier layer (8)
- Linear low density polyethylene modified with maleic anhydride - Tie layer (3)
- Ethylene-vinyl acetate copolymer with 19 % VA - Bulk layer (11)
- Low density polyethylene - Bulk layer (26)
- High density polyethylene - Outer abuse resistant layer (10)

### Example 2

### Bottom web

- Blend of 81 wt. % of ionomer - Surlyn® 1601 by DuPont, 14 wt. % of maleic anhydride modified polypropylene - Bynel 50E631 by DuPont (or alternatively 14 wt. % of Tymor 2206 by Rhom and Haas), and 5 wt. % of polybutene - Polybutene-1 PB 0300M by Basell - Outer sealant layer (19)
- Rubber modified ethylene-α-olefin copolymer grafted with maleic anhydride - Tie layer (24)
- Polypropylene containing a black pigment - Bulk layer (139)
- Rubber modified ethylene-α-olefin copolymer grafted with maleic anhydride - Tie layer (11)
- Ethylene-vinyl alcohol copolymer - barrier layer (12)
- Rubber modified ethylene-α-olefin copolymer grafted with maleic anhydride - Tie layer (11)
- Foamed polypropylene - obtained through the extrusion of polypropylene blended with a masterbatch of a chemical foaming agent - Bulk layer (457)

### Top skin web (crosslinked to about 200 kGy)

- Ionomer (based on ethylene-methacrylic acid copolymer) - Surlyn® 1702 by DuPont - Sealant layer (6)
- Low density polyethylene - Bulk layer (14)
- Ethylene-vinyl acetate copolymer with 19 % VA - Bulk layer (19)
- Linear low density polyethylene modified with maleic anhydride - Tie layer (3)
- Ethylene-vinyl alcohol copolymer - barrier layer (8)
- Linear low density polyethylene modified with maleic anhydride - Tie layer (3)
- Ethylene-vinyl acetate copolymer with 19 % VA - Bulk layer (11)
- Low density polyethylene - Bulk layer (26)
- High density polyethylene - Outer abuse resistant layer (10)

## Claims

1. A multi-layer film or sheet suitable for use in VSP applications that has an outer layer comprising a blend of from about 8 to about 30 wt. % of modified polypropylene, from 0 to about 20 wt. % of polybutene and the complement to 100 wt. % of ionomer, wherein said modified polypropylene is a polypropylene that has been modified by grafting thereon an unsaturated carboxylic acid or a derivative thereof.

2. The multi-layer film or sheet of claim 1 wherein the modified polypropylene is polypropylene grafted with maleic anhydride.

3. The multi-layer film or sheet of any of the preceding claims wherein the outer layer comprises a blend of from about 10 to about 30 wt. % of modified polypropylene and the complement to 100 wt. % of ionomer.

4. The multi-layer film or sheet of claim 3 wherein the outer layer essentially consists of a blend of from about 10 to about 30 wt. % of modified polypropylene and the complement to 100 wt. % of ionomer.

5. The multi-layer film or sheet of any one of claims 1 or 2 wherein the outer layer comprises a blend of from about 8 to about 30 wt. % of modified polypropylene, from about 5 to about 20 wt. % of polybutene and the complement to 100 wt. % of ionomer.

6. The multi-layer film or sheet of claim 1 wherein the layer directly adhering to the outer layer comprises an ethylene homo- or copolymer grafted with an anhydride, such as a LDPE or LLDPE grafted with maleic anhydride.

7. The multi-layer film or sheet of claim 6 wherein the bond strength between the outer layer and the layer directly adhering thereto is at least higher than about 4.0 N/25.4 mm, preferably at least higher than 5.0 N/25.4 mm, and more preferably at least higher than 6.0 N/25.4 mm.

8. The multi-layer film or sheet of any of the preceding claims which further comprises a second outer abuse-resistant layer, optionally a core gas-barrier layer, one or more tie or adhesive layers and optionally one or more bulk layers.

9. A peelable VSP package comprising a first web comprising an outer sealing layer comprising a blend of from about 8 to about 30 wt. % of modified polypropylene, said modified polypropylene being a polypropylene that has been modified by grafting thereon an unsaturated carboxylic acid or a derivative thereof, from 0 to about 20 wt. % of polybutene and the complement to 100 wt. % of ionomer and a second web comprising an outer sealing layer having an ethylene homo- or copolymer-based surface, wherein said outer sealing layers are sealed to each other in one or more selected areas with a seal strength of from about 2.0 to about 4.0 N/25.4 mm.

10. The peelable VSP package of claim 9 wherein the outer sealing layer of the first web comprises a blend of from about 10 to about 30 wt. % of modified polypropylene and the complement to 100 wt. % of ionomer.

11. The peelable VSP package of claim 10 wherein the outer sealing layer of the first web essentially consists of a blend of from about 10 to about 30 wt. % of modified polypropylene and the complement to 100 wt. % of ionomer.

12. The peelable VSP package of claim 9 wherein the outer sealing layer of the first web comprises a blend of from about 8 to about 30 wt. % of modified polypropylene, from about 5 to about 20 wt. % of polybutene and the complement to 100 wt. % of ionomer.

13. The peelable VSP package of any of preceding claims 9 to 12 wherein said first web is the package bottom web.

14. The peelable VSP package of any of preceding claims 9 to 13 wherein the ethylene homo- or copolymer of the second web is selected from the group consisting of ethylene-α-olefin copolymers, ethylene-acrylic acid copolymers, ethylene-methacrylic acid copolymers, ethylene-vinyl acetate copolymers, and ionomers.

## Patentansprüche

1. Mehrschichtfolie oder -lage, die zur Verwendung in VSP-Anwendungen geeignet ist und eine Außenschicht aufweist, die ein Gemisch aus etwa 8 bis etwa 30 Gew.-% modifiziertem Polypropylen, 0 bis etwa 20 Gew.-% Polybuten und einer Ergänzung auf 100 Gew.-% Ionomer umfasst, wobei das modifizierte Polypropylen ein Polypropylen ist, das modifiziert worden ist, indem darauf eine ungesättigte Carbonsäure oder ein Derivat derselben gepfropft ist.

2. Mehrschichtfolie oder -lage nach Anspruch 1, bei der das modifizierte Polypropylen mit Maleinsäureanhydrid gepfropftes Polypropylen ist.

3. Mehrschichtfolie oder -lage nach einem der vorhergehenden Ansprüche, bei der die Außenschicht ein Gemisch aus etwa 10 bis etwa 30 Gew.-% modifiziertem Polypropylen und einer Ergänzung auf 100 Gew.-% Ionomer umfasst.

4. Mehrschichtfolie oder -lage nach Anspruch 3, bei der die Außenschicht im Wesentlichen aus einem Gemisch aus etwa 10 bis etwa 30 Gew.-% modifiziertem Polypropylen und einer Ergänzung auf 100 Gew.-% Ionomer besteht.

5. Mehrschichtfolie oder -lage nach einem der Ansprüche 1 oder 2, bei der die Außenschicht ein Gemisch aus etwa 8 bis etwa 30 Gew.-% modifiziertem Polypropylen, etwa 5 bis etwa 20 Gew.-% Polybuten und einer Ergänzung auf 100 Gew.-% Ionomer umfasst.

6. Mehrschichtfolie oder -lage nach Anspruch 1, bei der die Schicht, die unmittelbar an die Außenschicht angrenzt, ein mit einem Anhydrid gepfropftes Ethylenhomo- oder -copolymer umfasst, wie z.B. ein mit Maleinsäureanhydrid gepfropftes LDPE oder LLDPE.

7. Mehrschichtfolie oder -lage nach Anspruch 6, bei der die Bindungsfestigkeit zwischen der Außenschicht und der Schicht, die unmittelbar daran angrenzt, mindestens größer als etwa 4,0 N/25,4 mm, vorzugsweise mindestens größer als 5,0 N/25,4 mm und besonders bevorzugt mindestens größer als 6,0 N/25,4 mm ist.

8. Mehrschichtfolie oder -lage nach einem der vorhergehenden Ansprüche, die ferner eine zweite äußere gebrauchsfeste Schicht, gegebenenfalls eine innenliegende Gasbarriereschicht, ein oder mehrere Verbindungs- oder Klebeschichten und gegebenenfalls eine oder mehrere Massenschichten umfasst.

9. Abziehbare VSP-Verpackung, die eine erste Bahn, welche eine äußere Siegelschicht enthaltend ein Gemisch aus etwa 8 bis etwa 30 Gew.-% modifiziertem Polypropylen, wobei das modifizierte Polypropylen ein Polypropylen ist, das modifiziert worden ist, indem darauf eine ungesättigte Carbonsäure oder ein Derivat derselben gepfropft worden ist, 0 bis etwa 20 Gew.-% Polybuten und einer Ergänzung auf 100 Gew.-% Ionomer umfasst, und eine zweite Bahn umfasst, die eine äußere Siegelschicht mit einer Oberfläche auf Basis von Ethylenhomo- oder -copolymer umfasst, wobei die äußeren Siegelschichten in einem oder mehreren ausgewählten Bereichen mit einer Siegelfestigkeit von etwa 2,0 bis etwa 4,0 N/25,4 mm aneinander gesiegelt sind.

10. Abziehbare VSP-Verpackung nach Anspruch 9, bei der die äußere Siegelschicht der ersten Bahn ein Gemisch aus etwa 10 bis etwa 30 Gew.-% modifiziertem Polypropylen und einer Ergänzung auf 100 Gew.-% Ionomer umfasst.

11. Abziehbare VSP-Verpackung nach Anspruch 10, bei der die äußere Siegelschicht der ersten Bahn im Wesentlichen aus einem Gemisch aus etwa 10 bis etwa 30 Gew.-% modifiziertem Polypropylen und einer Ergänzung auf 100 Gew.-% Ionomer besteht.

12. Abziehbare VSP-Verpackung nach Anspruch 9, bei der die äußere Siegelschicht der ersten Bahn ein Gemisch aus etwa 8 bis etwa 30 Gew.-% modifiziertem Polypropylen, etwa 5 bis etwa 20 Gew.-% Polybuten und einer Ergänzung auf 100 Gew.-% Ionomer umfasst.

13. Abziehbare VSP-Verpackung nach einem der vorhergehenden Ansprüche 9 bis 12, bei der die erste Bahn die Bahn des Verpackungsbodens darstellt.

14. Abziehbare VSP-Verpackung nach einem der vorhergehenden Ansprüche 9 bis 13, bei der das Ethylenhomo- oder -copolymer der zweiten Bahn ausgewählt ist aus der Gruppe bestehend aus Ethylen/α-Olefin-Coplymeren, Ethylene/Acrylsäure-Copolymeren, Ethylen/Methacrylsäure-Copolymeren, Ethylen/Vinylacetat-Copolymeren und Ionomeren.

## Revendications

1. Film ou feuille multicouche adapté à l'utilisation dans les applications en pellicules sous vide (VSP) qui comporte une couche externe comprenant un mélange d'environ 8 à environ 30 % en poids de polypropylène modifié, de 0 à environ 20 % en poids de polybutène et du complément à 100 % en poids d'ionomère, dans lequel ledit polypropylène modifié est un polypropylène qui a été modifié par greffage sur celui-ci d'un acide carboxylique insaturé ou d'un dérivé de celui-ci.

2. Film ou feuille multicouche selon la revendication 1 dans lequel le polypropylène modifié est un polypropylène greffé avec de l'anhydride maléique.

3. Film ou feuille multicouche selon l'une quelconque des revendications précédentes dans lequel la couche externe comprend un mélange d'environ 10 à environ 30 % en poids de polypropylène modifié et du complément à 100 % en poids d'ionomère.

4. Film ou feuille multicouche selon la revendication 3 dans lequel la couche externe est essentiellement constituée d'un mélange d'environ 10 à environ 30 % en poids de polypropylène modifié et du complément à 100 % en poids d'ionomère.

5. Film ou feuille multicouche selon l'une quelconque des revendications 1 ou 2 dans lequel la couche externe comprend un mélange d'environ 8 à environ 30 % en poids de polypropylène modifié, d'environ 5 à environ 20 % en poids de polybutène et du complément à 100 % en poids d'ionomère.

6. Film ou feuille multicouche selon la revendication 1 dans lequel la couche adhérant directement à la couche externe comprend un homo- ou un copolymère d'éthylène greffé avec un anhydride, tel qu'un LDPE ou un LLDPE greffé avec de l'anhydride maléique.

7. Film ou feuille multicouche selon la revendication 6 dans lequel la résistance d'adhésion entre la couche externe et la couche adhérant directement à celle-ci est au moins supérieure à environ 4,0 N/25,4 mm, de préférence au moins supérieure à 5,0 N/25,4 mm, et plus préférablement au moins supérieure à 6,0 N/25,4 mm.

8. Film ou feuille multicouche selon l'une quelconque des revendications précédentes qui comprend en outre une deuxième couche externe résistant aux mauvais traitements, optionnellement une couche centrale formant barrière contre les gaz, une ou plusieurs couches de liaison ou d'adhérence et optionnellement une ou plusieurs couches conférant du bouffant.

9. Emballage pelable en pellicule sous vide comprenant une première feuille continue comprenant une couche de scellement externe comprenant un mélange d'environ 8 à environ 30 % en poids de polypropylène modifié, ledit polypropylène modifié étant un polypropylène qui a été modifié par greffage sur celui-ci d'un acide carboxylique insaturé ou d'un dérivé de celui-ci, de 0 à environ 20 % en poids de polybutène et du complément à 100 % en poids d'ionomère et une deuxième feuille continue comprenant une couche de scellement externe ayant une surface à base d'homo- ou de copolymère d'éthylène, dans lequel lesdites couches de scellement externes sont scellées l'une à l'autre au niveau d'une ou de plusieurs zones choisies avec une force de scellage d'environ 2,0 à environ 4,0 N/25,4 mm.

10. Emballage pelable en pellicule sous vide selon la revendication 9 dans lequel la couche de scellement externe de la première feuille continue comprend un mélange d'environ 10 à environ 30 % en poids de polypropylène modifié et du complément à 100 % en poids d'ionomère.

11. Emballage pelable en pellicule sous vide selon la revendication 10 dans lequel la couche de scellement externe de la première feuille continue est essentiellement constituée d'un mélange d'environ 10 à environ 30 % en poids de polypropylène modifié et du complément à 100 % en poids d'ionomère.

12. Emballage pelable en pellicule sous vide selon la revendication 9 dans lequel la couche de scellement externe de la première feuille continue comprend un mélange d'environ 8 à environ 30 % en poids de polypropylène modifié, d'environ 5 à environ 20 % en poids de polybutène et du complément à 100 % en poids d'ionomère.

13. Emballage pelable en pellicule sous vide selon l'une quelconque des revendications précédentes 9 à 12 dans lequel ladite première feuille continue est la feuille continue constituant le fond de l'emballage.

14. Emballage pelable en pellicule sous vide selon l'une quelconque des revendications précédentes 9 à 13 dans lequel l'homo- ou le copolymère d'éthylène de la deuxième feuille continue est choisi dans le groupe constitué des copolymères d'éthylène-α-oléfine, des copolymères d'éthylène-acide acrylique, des copolymères d'éthylène-acide méthacrylique, des copolymères d'éthylène-acétate de vinyle et des ionomères.
